# EUROPEAN PATENT SPECIFICATION

(11) **EP 0 687 196 B1**
(45) Date of publication and mention of the grant of the patent: **27.08.1997**
(21) Application number: 94909398.3
(22) Date of filing: 07.03.1994
(51) Int. Cl.: B01D 45/14

(54) **SEPARATION OF PARTICLES FROM AN AIR STREAM AND PRECIPITATOR FOR THIS PURPOSE**
ABTRENNUNG VON TEILCHEN AUS EINEM LUFTSTROM UND ABSCHEIDER FÜR DIESEN ZWECK
SEPARATION DE PARTICULES D'UN FLUX D'AIR ET DISPOSITIF PRECIPITATEUR UTILISE A CET EFFET

(30) Priority: 05.03.1993 SE 9300723; 09.09.1993 SE 9302921
(43) Date of publication of application: 20.12.1995
(73) Proprietor: P.A.S. MATERIAL AKTIEBOLAG, 432 96 Askloster (SE)
(72) Inventor: SIGURDSSON, Per, Arne, S-432 96 skloster (SE)
(74) Representative: Tiedtke, Harro, Dipl.-Ing.
(86) International application number: SE9400192
(87) International publication number: WO9420194

(56) References cited:
- WO-A-81/01962
- DE-A- 1 955 966
- US-A- 2 425 410
- US-A- 4 118 207
- US-A- 4 561 867

## Description

The present invention relates to a dust separator comprising a rotatable container and to method of separating particle-shaped material from a gas stream using this separator.

At mills and other places of work where dust particles are formed or are present at the magnitude of about 1-100 µm, or when dust and similar particles of other types are present, such as colour particles in colour mixed up air, soot in hot flue gases etc., it is a problem to separate, for example, gas and particles from each other by means of economical and rational operating methods. The conventional method is carried out such that the contaminated gas etc. is lead through a filter of some kind, for example, longish or plane filters of fibre material, which are quickly obstructed by i.a. collected particles, or are smeared down, or which do not endure high heat. Because of this, for example, the flue gases first have to be cooled to an appropriate purification temperature of the filter.

The smallest size of the particles which thereby have been removed from the gases in question neither has been considered to be not too small.

From the document US-A-2 425 410 an oil separator is known in which a gas stream is lead from the centre of rotation of a rotatable container into a first circular compartment of the container, which serves for axially leading the gas stream into a second compartment via an axially extending passage.

Furthermore, it is previously known from US,A, 4 118 207 to separate material that is particle-shaped from gaseous mediums by letting the gas be conveyed radially inwards against a centre of the rotor between a plurality of rotatable discs. Thereby, the gas is conducted axially outwards through the discs while the particles of the input gas are influenced by the discs to be thrown radially against a stationary housing wall for collection of the particles in, e.g., a cyclone. No efficient separation is achieved thereby since the gas must be forced to be guided against a centre of rotary discs. Besides, the mantle surface of the housing is worn since it is stationary while the particles that are separated from the gas and thrown against the mantle surface move relatively to the mantle.

The object of the present invention is to provide a dust separator and a method for separating particle-shaped material from a gas stream.

This object is achieved by means of the dust separator according to claim 1, which accomplishes the method according to claim 4. Preferred embodiments of the separator and the method are disclosed in the depending claims 2 and 3 as well as 5 to 9.

In the following the invention is further described by embodiments with reference to the enclosed drawings.
Fig 1 shows a dust separator schematically in section along a vertical plane,

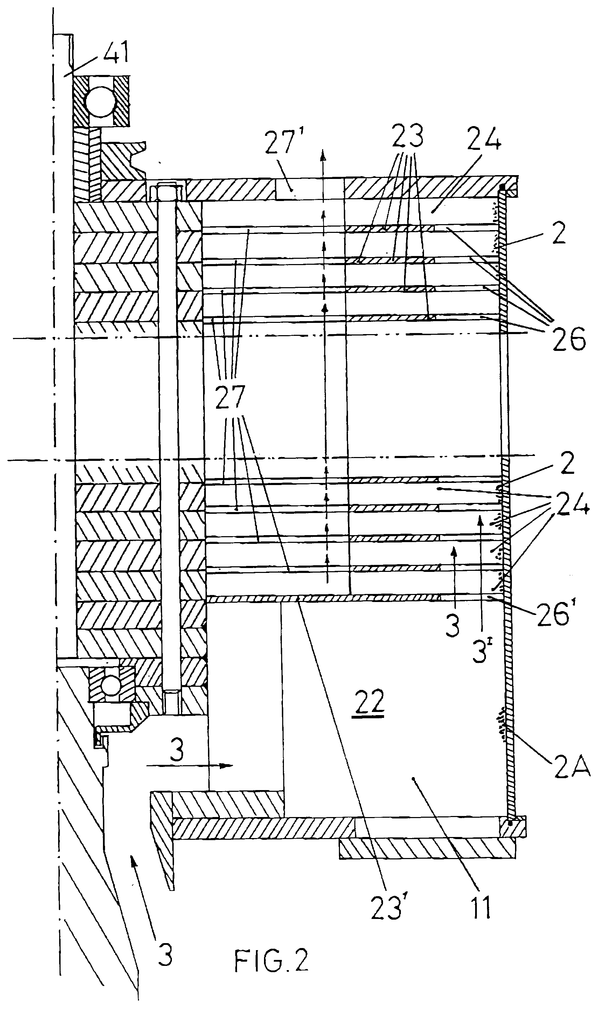

Fig 2 shows an elucidative view of a similar dust separator,

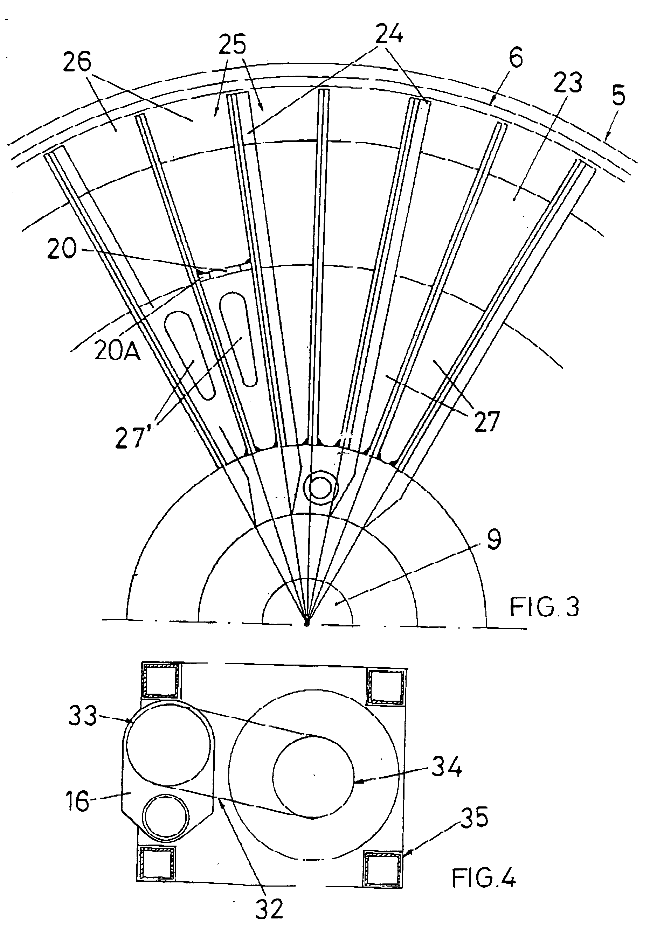

Fig 3 shows a partial view of a horizontally as well as vertically subdividing element of a dust separator seen in a plan view,
Fig 4 shows a schematic view of a dust separator with drive means,

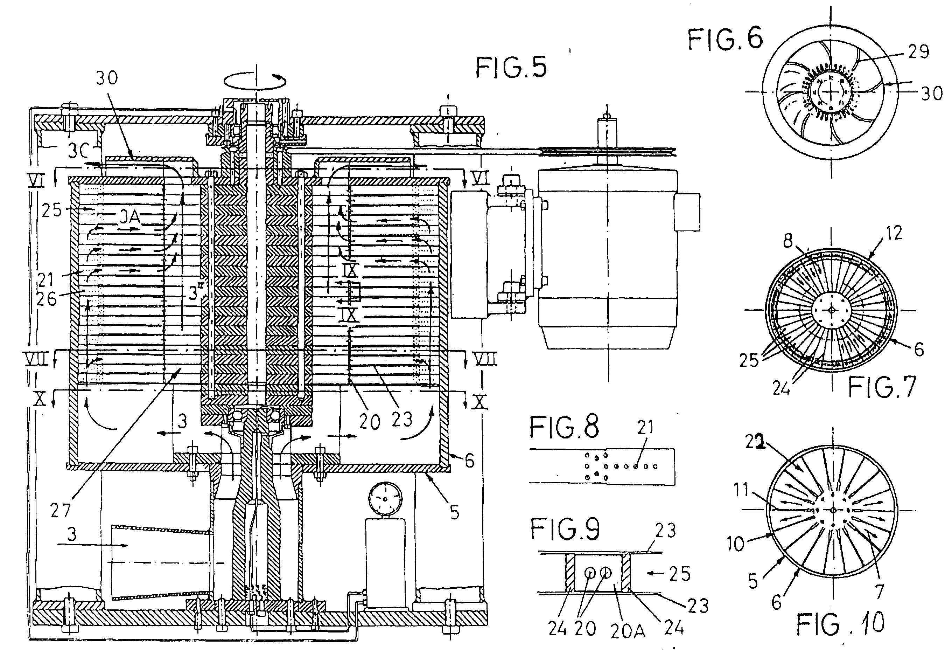

Fig 5 shows an additional embodiment of a dust separator seen along a vertical intersection plane.
Fig 6 shows a section along the line VI-VI in Fig 5,
Fig 7 shows a sectional view along the line VII-VII in Fig 5,
Fig 8 shows a plan view of a holder part,
Fig 9 shows a sectional view along the line IX-IX in Fig 5,
Fig 10 shows a sectional view along lines X-X in Fig 5,
Fig 11 shows a sectional view of an additional example of a dust separator,
Fig 12 and 13 shows cross sectional views of further dust separators shown,
Fig 14 shows an end view of the dust separator with drain hatches shown, and
Fig 15 shows a drain hatch in open and closed position respectively.

On the condition that the need to replace earlier used cyclones, filters and fans with other means to solve the stated problem without expensive acquisition- and running costs and without risk of stoppage is enormously great with regard to both the work-environment, economy and environment, the separation of airborne industrial pollution 2 of above stated types is based on the separation of dust 2 and similar particles 2 from air 3 or another gas stream 3 into a container 5 exhibiting rotary parts 4 for guiding said gas stream 3. More specifically inner parts 4 of the container 5 as well as the mantle 6 of the container are allowed to rotate, so that the gas stream 3 is forced against the periphery of the container for separation of dust 2, which is thrown radially out 7 against the mantle 6 of the container by the centrifugal force, whereupon the gas stream 3A which is partly separated from dust 2 is influenced to move radially 8 towards the centre 9 of the container.

The invention is further based on the fact that the contaminated gas 3 is purified in at least two stages. Preferably, the gas stream 3 is allowed to be sucked into the container 5 at the proximity of the rotation centre 9 of the container in order to pass through a first compartment 10, in which the gas stream is divided by a plurality of axially and radially extending blades 11. These blades 11 are arranged for a first separation of primarily occuring larger particles 2A of the gas stream 3. The gas stream is subsequently lead into a second compartment 12 of the container 5, which is subdivided into a plurality of sections 13 of a plurality of disc-shaped lamellae, to i.a. minimize turbulence of the gas stream 3 which moves in a direction towards the container rotation centre 9. The gas 3 consequently is sucked into the centre of the first compartment 10 of the rotating container via for example an end pipe operating as an inlet 15 in order to be forced against the periphery because of the rotary motion 14 at the same time as it follows the rotary motion of the container. Due to the rotary motion one part of the dust 2 is thrown, preferably the heavier part 2A thereof, against the mantle 6 of the container. The gas 3A partly cleaned thereby is influenced at a slow motion, preferably about c:a 1 m/s, to be drawn against the centre 9 of a second compartment 12. Due to the centrifugal force, when the container is rotated 14, the impurities 2A,2 stay against the container mantle 6 inside of the container 5, as long as the container 5 is driven by, for example, an electric motor 16 to be rotated about an essentially vertical rotation axis 18.

Test-operation of a dust separator 17 according to the invention for purification of ground talcum with a grain size of 0-10 µm in an airflow, showed that a purification degree of c.a. 99,9 % was achieved However, when the flow velocity of the airflow through the dust separator was increased, it appeared that the purification degree decreased considerable to about 97-98 %. The reason for this is that the higher air velocity gives rise to a problem of internal turbulence of the air, and thus deteriorated separation as a result.

In purpose of further diminishing the turbulence and obtaining an even flow of the gas 3 at its way towards the centre, the gas stream is preferably allowed to pass through a number of constrictions 20 on its way towards the centre 9 of the container. In addition the gas stream is preferably allowed to pass a number of wires 21 to disturb the inner turbulence of the gas stream, as well as the gas being drawn against the centre 9 of the container at a low velocity, for instance 1 m/sec, resulting in an efficient size separation of particles.

The dust separator 17 according to the present invention includes a rotatable container 5 which has inner parts 4 as well as an external mantle 6 of the container rotatable in a common direction of rotation 14 about an essentially vertical rotation axis 18 as an integrated unit. The container 5 is divided into the first compartment 10 which has a plurality of axially and radially extending subdividing blades 11, between which are formed a plurality of chambers 22 separated from each other, and the second compartment 12 which is divided into a plurality of horizontal disc-shaped lamellae 23 in sections 13.

Said formed horizontal sections 13, which are situated inbetween and are delimited in a direction upwards and downwards respectively of each said disc-shaped lamellae 23 are provided to improve the purification and minimize the turbulence of the gas which moves against the centre of the container, divided by axial partitions 24, to form spaces 25 shaped like cake pieces.

Further, the container 5 can be provided with a number of axially extending passages 26 intended for flow through of a gas stream 3^{I}. Further, the container 5 can have a number of essentially radially and/or axially, extending openings 27, for flow through of an additional gas stream 3^{II}.

At an upper end plate an axial smaller opening 27^{I} may extend for the output of the gas 3^{II} while the apertures 27 of the lamellae 23 can be larger. Likewise an inlet passage 26^{I} of a lower lamella 23^{I} can be the only gas passage through said lamella 23^{I}, in contrast to remaining lamellae 23 which are provided with inner as well as outer located holes 26,27.

The centrifugal force of the container 5, the density of the intended particles, the form etc, as well as the velocity of the air or other gas on its way towards the centre 9 of the container 5 normally determine the size of the maximum dust particle, which can pass through the structure without trouble. An appropriate centrifugal force can be 1000- 50000 G.

The air 3 or other gas which is intended to be cleaned is at best drawn into the container 5 at its lower end in the proximity of its centre of rotation 9, and by preferably letting out the purified air 3C further radially outwards from the centre 9 of the container 5; this also functions as a fan. Thus, the outlet 28 may be situated at the opening of a fan wheel 30 exhibiting cross-mounted wings 29. Moreover, the pressure potential determines, which in turn is defined by the number of revolutions and radius, where the air is let out, as well as the area through which the air passes and the air flow through the structure. If, for instance, extreme separation is desired, the air speed towards the centre 9 can be chosen for example less than 1 m/s.

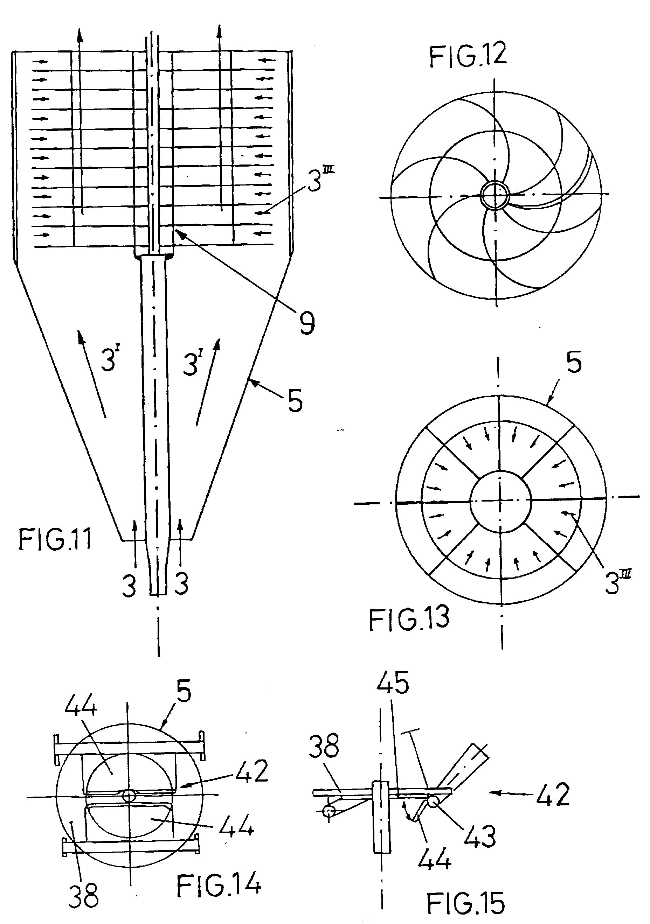

At, for instance, the embodiment of a container 5 as is shown in fig 11, the inlet velocity for air 3, which is going to be cleaned from solid particles and which is input through a lower inlet, can be about 36 m/sec. Continuous flowing through of the air 3^{I} in the container 5 upwards, gives a speed of about 2 m/s whereupon finally the radial speed 3^{III} inwards towards the centre 9 was as low as 0.5 m/s.

In fig 4, the drive coupling in the form of a driving belt 32 provided between a drive motor 16 and its pulley 33 and the pulley 34 of a container 5, is shown; this is encased in a machine frame 35.

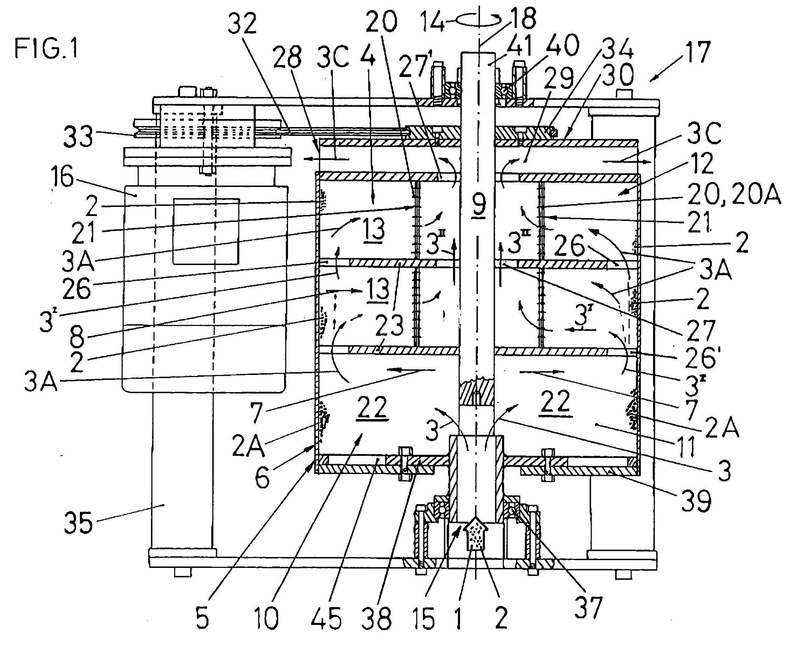

With reference to fig 1 the parts shown thereon signifies the following: An inlet pipe 15 opening out at the bottom of the container 5, which inlet pipe is pivotably journalled in a bearing 37. A container bottom 38 with a bottom lid 39 is provided which can be opened for draining solid material from the container 5 at desired occasions when the container 5 is not rotated.

The wires 21 which disturb the turbulence of the air 3 can be piano wire, and constrictions 20 can be formed from perforated cross-mounted plates 20A.

The container 5 is built up about a rotation axis 41 supported on bearings 37,40.

In fig. 14 and 15 examples are shown of a drain mechanism 42 for the container 5. A hatch 44 pivoted about a pivot joint 43, which in swung up position with the hatch 44 received tightly against the bottom 38 of the container closes an opening 45 which is actuatable to automatically be able to uncover said opening 45 for drainage of the container 5. Drainage occurs preferably when the dust separator 5 stands still. A divided hatch 44 for example at the lower end plate 38 can be opened automatically. If necessary, the whole end plate 38 is lowered downwards so that out-centrifuged dust 2 can flow or is scraped down into a container. Messy dust can, for example, be flushed out and can also be mixed with a fluid so that it flows out when the hatch 44 is opened. Thus, the intended rotary dust separator 17 is efficient in the whole range dimension of particles 1-100 µm and it can also in a special design purify very hot gases efficiently up to about 400°C. There is no particular upper limit for maximum quantity of air, however, at air quantities exceeding about 50 000 m³/H probably several parallel apparatuses are to be preferred. Nor is the dust separator 17 especially sensitive to wearing particles to be separated since the mantle 6 of the container has the same circumferential velocity as the air therein. The mantle 6 preferably can consist of a glass-fibre lamination, e.g., carbon fibre. In order to obtain a reasonably good separation result, all maximum values should not be combined in one and the same dust separator, and with maximum values should be understood a lower dust separation limit of about 1 µm maximum gas temperature about 400°C and an amount of air of about 50 000 m¹/H. An appropriate centrifugal force for the particles can be varied, for example, between 1000 G and 50 000 G.

Characteristics and advantages of a dust separator according to the present invention are i.a.:
High air velocity at the separation up to about 400 m/sec.
The mantle 6 rotates with same circumferential velocity as the air.
The centrifugal force can be selected as high as about 50 000 G, which entails that a particle that weighs 1 gram is exposed to the force of 50 kp (490 N).
A small inner turbulence gives good separation.
Low energy consumption since the cleaned air leaves the structure 17 with a relatively low speed 3C (about 30-60 m/sec).
No pressure drop arises in any filters, coolers and the like, which further contributes to a low energy consumption.
The structure 17 replaces complicated and expensive cyclones, filters, fans, etc. in one and the same unit.
The structure endures even high temperatures, for example up to about 400°C. Common filters endure maximum about 120°C.
The structure gives low manufacturing costs in relation to such known.

Complete, or at least almost complete separation of solid particles 2 from a gas stream 3 is now made possible, technically as well as economically.

For an amount of air of c.a. 2000 m3/h an appropriate dimensioning of a construction has for example proved to be:
Drum diametre about 700 mm
Drum height about 700 mm
Drum weight about 250-300 kg
Motor power about 7,5 kW
Separation degree of 15 litre particles per drain. maximum 25 kg
Number of revolutions about 9000 R/min
Centrifugal force maximum about 25 000G
Air inlet velocity about 60 m/sec
Airflow velocity radially in a direction towards drum centre about 1 m/sec

A thus efficient and secure procedure and a simple and sturdy dust separator, respectively, is achieved by means of the present invention, but the invention is not limited to the embodiments described above and shown in the drawings, but can be varied within the scope of the patent claims without departing from the inventive concept.

## Claims

1. A dust separator (17) comprising a container (5) with a mantle (6) rotatable as an integrated unit about an essentially vertical axis (18), said container (5) having
a first compartment (10),
a second compartment (12),
a gas inlet (15) in the proximity of the centre of rotation (9) of said container (5) for leading said gas stream to the centre of said first compartment (10) and
a gas outlet (28) for leading the clean gas stream out of said second compartment (12),
wherein
said first compartment (10) has a plurality of axially and radially extending subdivided blades (11) with a plurality of chambers (22) formed therebetween and separated from each other and
said second compartment (12) is divided by a stack of horizontal disc-shaped lamellae (23) into a plurality of sections (13) communicating with each other, each of said sections being subdivided by vertical, radial partitions (24) into spaces (25),
so that, in operation during rotation, the gas stream flows through said chambers (22), then passes into said sections (13) and moves slowly against the centre of rotation (9) in order to exit through the outlet (28) while the dust is thrown against the inside of the container mantle and is separated.

2. Dust separator (17) according to claim 1, wherein said container (5) has axially extending passages (26, 27) which allow communication between said sections (13) for leading a gas stream (3^{I}) to flow (6) within the area between the centre (9) of the container and the rotating mantle (6), as well as for releasing collected dust along the inside of the mantle (6) when the rotation of the container (5) is reduced.

3. A method for separating particle-shaped material such as dust (2) from a gas stream using the dust separator (17) claimed in claim 1, wherein said container (5) of said dust separator (17) is rotated so that the gas stream is forced towards the periphery of said first compartment (10) and a first separation of primarily larger particles occurs, after which the gas stream enters into said second compartment (12) for a further separation of particles and is lead to move slowly against the centre (9) of rotation.

4. Method according to claim 3, wherein the dust (2) is thrown against the mantle (6) of the container (5).

5. Method according to claim 3 or 4, wherein the gas stream (3) is sucked into the container (5) in the proximity of its centre of rotation (9).

6. Method according to one of the claims 3 to 5, wherein in order to diminish the turbulence, the gas stream passes through a number of constrictions (20) on its way towards the centre (9) of the container.

7. Method according to claim 6, wherein the gas stream passes through wires (21).

8. Method according to claim 3 to 6, wherein the gas is drawn towards the container centre (9) at a low velocity of 1 m/sec.

## Patentansprüche

1. Staubtrenneinrichtung (17), die einen Behälter (5) mit einem Mantel (6) aufweist, der als eine einstückige Einheit um eine im wesentlichen vertikale Achse (18) drehbar ist, wobei der Behälter folgende Bauteile hat:
einen ersten Raum (10),
einen zweiten Raum (12),
einen Gaseinlaß (15) in der Nähe der Drehmitte (9) des Behälters (5), um den Gasstrom zu der Mitte des ersten Raums (10) zu führen, und
einen Gasauslaß (28), um den gereinigten Gasstrom aus dem zweiten Raum (12) herauszuführen,
wobei der erste Raum (10) eine Vielzahl von sich axial und radial erstreckenden unterteilenden Leitschaufeln (11) mit einer Vielzahl von dazwischen ausgebildeten und voneinander getrennten Kammern (22) hat, und
wobei der zweiten Raum (12) durch einen Stapel von horizontalen scheibenförmigen Lamellen (23) in eine Vielzahl von miteinander verbundenen Bereichen (13) geteilt ist, wobei jeder der Bereiche durch vertikale, radiale Unterteilungen (24) in Zwischenräume (25) unterteilt ist,
so daß im Betrieb während dem Drehen der Gasstrom durch die Kammern (22) strömt, dann in die Bereiche (13) eintritt und sich langsam zu der Drehmitte (9) bewegt, um durch den Auslaß (28) auszutreten, während der Staub gegen das Innere des Behältermantels geschleudert und getrennt wird.

2. Staubtrenneinrichtung (17) nach Anspruch 1, wobei der Behälter (5) axial sich erstreckende Kanäle (26, 27) hat, die eine Verbindung zwischen den Bereichen (13) ermöglichen, um einen Gasstrom (3^{I}) so zu führen, daß er innerhalb dem Abschnitt zwischen der Mitte (9) des Behälters und dem sich drehenden Mantel (6) strömt, sowie um gesammelten Staub entlang dem Inneren des Mantels (6) freizugeben, wenn die Drehung des Behälters (5) reduziert wird.

3. Verfahren zum Trennen von partikelförmigem Material, wie beispielsweise Staub (2), aus einem Gasstrom unter Verwendung der Staubtrenneinrichtung (17) nach Anspruch 1, wobei der Behälter (5) der Staubtrenneinrichtung (17) so gedreht wird, daß der Gasstrom zu dem Rand des ersten Raums (10) gezwungen wird und eine erste Trennung von hauptsächlich größeren Partikeln erfolgt, wonach der Gasstrom für eine weitere Trennung der Partikel in den zweiten Raum (12) eintritt und so geführt wird, daß er sich langsam zu der Drehmitte (9) bewegt.

4. Verfahren nach Anspruch 3, wobei der Staub (2) gegen den Mantel (6) des Behälters (5) geschleudert wird.

5. Verfahren nach Anspruch 3 oder 4, wobei der Gasstrom (3) in den Behälter (5) in der Nähe seiner Drehmitte (9) eingesaugt wird.

6. Verfahren nach einem der Ansprüche 3 bis 5, wobei zum Abschwächen der Turbulenz der Gasstrom auf seinem weg zu der Mitte (9) des Behälters durch eine Anzahl von Begrenzungen (20) durchtritt.

7. Verfahren nach Anspruch 6, wobei der Gasstrom an Drähten (21) vorbeitritt.

8. Verfahren nach Anspruch 3 bis 6, wobei das Gas mit einer niedrigen Geschwindigkeit von 1 m/Sek zu der Behältermitte (9) gezogen wird.

## Revendications

1. Un séparateur de poussière (17), constitué d'un récipient (5), doté d'une enveloppe (6) susceptible de tourner sous forme d'unité intégrée, autour d'un axe (18) sensiblement vertical, ledit récipient (5) comportant :
un premier compartiment (10),
un deuxième compartiment (12),
une entrée de gaz (15) ménagée à proximité du centre de rotation (9) dudit récipient (5), afin de guider ledit courant de gaz vers le centre dudit premier. compartiment (10), et
une sortie de gaz (28), destinée à guider le courant de gaz propre hors dudit deuxième compartiment (12),
dans lequel
ledit premier compartiment (10) comporte une pluralité de pales (11) subdivisées, s'étendant axialement et radialement, avec une pluralité de chambres (22), formées entre elles et séparées les unes des autres, et
ledit deuxième compartiment (12) est divisé par un empilement de lamelles (23) discoïdes horizontales, en une pluralité de sections (13), communiquant les unes avec les autres, chacune desdites sections étant subdivisée à l'aide de cloisons (24) radiales, verticales, en des espaces (25),
de manière que, en fonctionnement, pendant la rotation, le courant de gaz s'écoule à travers lesdites chambres (22), puis passe dans lesdites sections (13) et se déplace lentement vers le centre de rotation (9), de manière a sortir par la sortie (28), tandis que la poussière est projetée contre la surface intérieure de l'enveloppe du récipient et est séparée.

2. Séparateur de poussière (17) selon la revendication 1, dans lequel ledit récipient (5) comporte des passages (26, 27) s'étendant axialement qui permettent la communication entre les sections (13) afin de guider un courant de gaz (3^{I}) dans son écoulement à l'intérieur de l'aire se trouvant entre le centre (9) du récipient et l'enveloppe rotative de récipient (6), ainsi que de libérer la poussière collectée sur la surface intérieure de l'enveloppe rotative (6), lorsque la rotation du récipient (5) est réduite.

3. Un procédé de séparation d'un matériau à forme particulaire, tel que de la poussière (2), vis-à-vis d'un courant de gaz mettant en oeuvre le séparateur de poussière (17) selon la revendication 1, dans lequel ledit récipient (5) dudit séparateur de poussière (17) est mis en rotation afin que le courant de gaz soit forcé vers la périphérie dudit premier compartiment (10) et que se produise une première séparation de particules majoritairement grosses, après quoi, le courant de gaz entre dans ledit deuxième compartiment (12) pour y subir une séparation supplémentaire des particules et est mené a se déplacer doucement vers le centre de rotation (9).

4. Procédé selon la revendication 3, dans lequel la poussière (2) est projetée contre l'enveloppe (6) du récipient (5).

5. Procédé selon la revendication 3 ou 4, dans lequel le courant de gaz (3) est introduit dans le récépient (5) à proximité de son centre de rotation (9).

6. Procédé selon l'une des revendications 3 à 5, dans lequel, en vue de diminuer la turbulence, le courant de gaz passe à travers un certain nombre d'étranglements (20) lors de son cheminement vers le centre (9) du récipient.

7. Procédé selon la revendication 6, dans lequel le courant de gaz passe dans des grilles (21).

8. Procédé selon l'une des revendications 3 à 6, dans lequel le gaz est entraîné vers le centre (9) du récipient.
